# EUROPEAN PATENT SPECIFICATION

(11) **EP 1 969 075 B1**
(45) Date of publication and mention of the grant of the patent: **13.07.2016**
(21) Application number: 06841508.2
(22) Date of filing: 20.12.2006
(51) Int. Cl.: C09D 183/04, C09D 5/10, C08K 3/08

(54) **HEAT RESISTANT COATING**
HITZEBESTÄNDIGER ÜBERZUG
REVETEMENT RESISTANT A LA CHALEUR

(30) Priority: 02.01.2006 EP 06100020; 06.02.2006 US 765221 P
(43) Date of publication of application: 17.09.2008
(73) Proprietor: Akzo Nobel Coatings International BV, 6824 BM Arnhem (NL)
(72) Inventor: HAMILTON, Lesley Michelle, Syresham Northants NN13 5HP (GB); WILLS, Trevor Michael, Sunderland SR3 1NX (GB); ANDREWS, Adrian Ferguson, Hexham Northumberland NE47 5DX (GB); HALLIDAY, Marie Clare, Blackhill Durham DH8 5TD (GB)
(74) Representative: Akzo Nobel IP Department
(86) International application number: PCT/EP2006/070007
(87) International publication number: WO 2007/077130

(56) References cited:
- US-A- 3 846 359
- US-A1- 2004 127 625

## Description

The present invention relates to coating compositions that can be used to prepare a heat resistant and/or corrosion protection coating on a substrate. The coating composition can be cured at low temperatures and can be formulated with a small amount of organic solvent.

US 3,412,063 relates to low temperature curable heat resistant coating compositions based on hydrolysed tetraethyl orthosilicate and aluminium oxide. JP 1988-90577 describes heat resistant coatings comprising an alkyl silicate or a condensation product thereof, an alkyl titanate or a chelate compound thereof, and an organic resin. US 3,846,359 discloses coating compositions curable by drying in air comprising an alkyl silicate and/or an alkylpolysilicate, an alkyl titanate and/or an alkyl polytitanate, a film forming resin, such as a silicone resin, and conventional organic solvents. US2004/0127625 discloses a Chromium VI free coating composition which comprises a binder and a corrosion inhibitor in a solvent, wherein the binder comprises a silicate and an organic titanate, and the corrosion inhibitor comprises aluminium particles and zinc particles.

The aim of the present invention is to provide a coating composition that can be formulated such that it has a sufficiently low viscosity to be sprayed upon a substrate without having to be pre-heated and nevertheless can be formulated such that it complies with current legislation on volatile organic content (VOC). The aim is to provide a high solids VOC compliant coating that is curable at ambient temperature. It should be possible to apply the coating by means of spray application, brush and/or roller to substrates at ambient temperature and to heated substrates, for example substrates at a temperature of 150 °C.

The coating prepared from the coating composition should provide corrosion resistance not only at low but also at high temperatures, for example in the range of -30 °C to +400 °C, or for example under cryogenic circumstances,-196 °C to ambient. In particular, the coating should provide corrosion resistance to carbon steel (normal steel) at a temperature in the range of -4 °C to +150 °C or provide corrosion resistance to stainless steel at a temperature in the range of +50 °C to +150 °C.
The coating composition should be heat and crack resistant, even when operating at high temperatures or through cyclic temperatures. Preferably, the coating shows heat and crack resistance in cycles with a very rapid heating and/or cooling rate. Preferably, the coating should be able to resist a test in which a coated substrate is heated to a temperature of 400 °C and then put into a bucket of water at room temperature. Additionally, or alternatively, the coating should be able to resist a heating rate of 20 °C/min, or being put straight into a heated oven. Preferably, when applied to a pipe, the coating should be able to withstand steam suddenly being passed through the pipe.

Preferably, curing of the coating to obtain good corrosion resistance requires no heating. The coating should provide corrosion resistance when cured at room temperature.

When equipment is operating at a temperature above 120 °C, and especially above 150 °C, corrosion normally is not a problem. Nevertheless, sometimes the temperature of the equipment needs to be lowered, for instance because of maintenance or because of re-engineering. When cooling, corrosion becomes a problem. This is especially the case when the equipment gets wet, for example due to condensation. The corrosion problem is even worse when salts are present. Salts may be present in the air, for example, especially close to sea water, salts may come from sea water spray mist, and steam from cooling towers may comprise salts. Water and/or salts may even reach the surface of an insulated pipe when there is a leak in the insulation. Another aim thus is to prepare a coating that can withstand the heat and also supplies corrosion resistance.

A further aim is a coating composition that can provide corrosion protection to steel under (thermal) insulation. This because moisture ingress into conventional insulation materials usually results in accelerated corrosion of the underlying steel surface.
Preferably, it should be possible to achieve the required properties when the coating is applied directly to metal, by using only one or two high build coating layers. Alternatively, it should be possible to achieve the required properties when the coating is applied to metal that is primed with a zinc rich primer. It should also be possible to obtain the required properties when the coating is applied directly to metal and then insulated.

The ambient temperature curable coating composition according to the present invention comprises:
- a linear or branched polysiloxane having the formula: 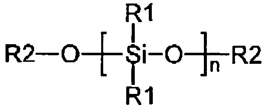 wherein each R1 is independently selected from the group of alkyl, aryl, alkoxy groups having up to eight carbon atoms, and OSi(OR3)₃ groups, wherein each R3 independently has the same meaning as R1, each R2 is selected from the group of hydrogen and alkyl and aryl groups having up to eight carbon atoms, and wherein n is selected such that the number average molecular weight Mn of the polysiloxane is in the range of from 200 to 6,000,
- one or more alkyl titanates,
- one or more fillers or pigments such as talc and/or mica,
- aluminium flakes, and
- optionally an alkyl orthosilicate or a condensation product thereof.

The coating compositions of the present invention show the advantages that were aimed for. They can be cured at ambient temperatures. Curing of the coating to obtain good corrosion resistance requires no heating. The coating will provide corrosion resistance at the room temperature level of cure. Nevertheless, heating of the coating, for example up to 200 °C, does enhance its properties, such as its corrosion resistance. Also, the mechanical properties are enhanced upon heating. Such heating may result in further curing. The heating may result in more cross-linking.

The coating compositions of the present invention can be formulated with a small amount of organic solvent while they still have a sufficiently low viscosity for spray application, without needing to be pre-heated. The coatings are easy to apply as they can be applied by means of, for example, airless spray, air spray, brush, and roller. An additional advantage of the coating compositions is that they are suitable for in-situ application to steel substrates operating at temperatures up to 150 °C.

The coatings prepared using a coating composition according to the present invention are durable and can tolerate mechanical damage. The coatings provide corrosion protection to steel and are heat resistant. They can provide corrosion protection to steel in both atmospheric service and under thermal insulation operating at continuous operating temperatures between -30 °C and 400 °C. They can also provide corrosion protection to steel both in atmospheric service and under thermal insulation operating in thermal cyclical conditions between -30 °C up to 400 °C without the need for additional heat curing, prior to being placed in service. They can also provide corrosion protection to steel under cryogenic circumstances. It is even possible to formulate a coating composition according to the present invention that provides effective protection to steelwork operating under cyclic conditions in the critical temperature range of 60 -150 °C. Due to its high crack resistance, the coatings according to the invention provide excellent corrosion protection under temperature cycles ranging from cryogenic to ambient circumstances.

A coating according to the present invention is suitable for providing corrosion protection to steelwork both in atmospheric service and under thermal insulation. Additionally, it is suitable as an anti-corrosion layer on substrates that are subject to cyclical wet and dry conditions, both in atmospheric service and under thermal insulation. The coating is also resistant to thermal shock experienced during rapid temperature cycling.

The coating compositions according to the present invention are ideally suited for use in the chemical process, offshore productions, the petrochemical and power industries, especially refineries, process units and cryogenic units, pipework, chimneys, vessels, flare stacks, exhausts, furnaces, exteriors of reactors, power plants, vents, and other structures. Significant volumes of insulated and uninsulated steelwork can be coated with a single specification, thereby reducing the complexity of work schedules and smoothing the progress of maintenance schedules.

The elongation to break of coatings prepared with a coating composition according to the present invention is less than 100 percent, preferably less than 20 percent, more preferably less than 5 percent. The glass transition temperature, Tg, of cured films prepared with a coating composition according to the present invention is higher than 0 °C, preferably higher than 10 °C, more preferably higher than 25 °C. The glass transition temperature (Tg) of a cured coating film can, for example, be measured according to ASTM method E1356-98, which is a standard test method for assignment of the glass transition temperature by Differential Scanning Calorimetry for differential thermal analysis. Calibration of the test apparatus can be performed according to, for example, ASTM method E967-03, which is a standard test method for temperature calibration of a Differential Scanning Calorimeter.

The coating composition of the present invention preferably has a volatile organic content (VOC) of less than 650 grams per litre, more preferably less than 430 grams per litre. More preferably still, the coating composition comprises a VOC of less than 340 grams per litre, even more preferably a VOC of less than 250 grams per litre. The organic solvent(s) that may be released during the curing of the coating composition contribute(s) to the VOC.
The solids content of a composition according to the present invention preferably is higher than 60 percent by weight, more preferably higher than 70 percent by weight, even more preferably 80 percent by weight, based on the total coating composition.

The polysiloxane that is present in the coating composition according to the invention can be linear or branched. The polysiloxane can comprise methyl and/or phenyl groups, together with alkoxy groups. Optionally, the polysiloxane comprises methyl groups, phenyl groups, and alkoxy groups, and no other types of R1, R2, or R3 groups.

As stated above, each R1 of the polysiloxane is independently selected from the group of alkyl, aryl, alkoxy groups having up to eight carbon atoms, and OSi(OR3)₃ groups, wherein each R3 independently has the same meaning as R1, each R2 is selected from the group of hydrogen and alkyl and aryl groups having up to eight carbon atoms. In one embodiment, the polysiloxane present in the coating composition comprises methyl and phenyl groups.

For the polysiloxane, n is selected such that the number average molecular weight Mn of the polysiloxane is higher than about 200, preferably higher than about 500, and lower than about 6,000, preferably lower than about 5,000. The polysiloxane preferably does not comprise epoxy or acid groups. The polysiloxane can be prepared by using chlorosilanes, for example from a mix of monomers and cyclics.

The alkyl titanate present in the coating composition according to the invention can be a monomeric titanate, a poly (alkyl titanate), or a mixture of monomeric titanate(s) and/or poly alkyl titanate(s). The alkyl groups on the alkyl titanate preferably contain three to eight carbon atoms, most preferably three to four carbon atoms. A poly (alkyl titanate) suitable for use in the present invention may be linear or branched. Suitable examples include butyl titanate, isopropyl titanate or mixtures thereof.

The talc that may be present in the coating composition according to the invention normally is a powder. It is a magnesium silicate comprising 3MgO-4SiO₂·H₂O. It normally is a monoclinic hydrated magnesium silicate, MgSi₈O₂₀(OH)₄. It usually is massive and foliated and is a common mineral. Preferably, platy talc is used.
In one embodiment, microsized talc having the following particle size distribution is used: a top cut at about 10 to 20 microns, preferably at about 12 to 16 microns, a median particle size of about 2 to 8 microns, preferably of about 3 to 5 microns, and 20 to 30 percent by weight of particles having a size below 2 microns.

The aluminium flakes present in the coating composition according to the invention can for instance have a particle size ranging from about 1 to 100 microns (µm) in the longer dimensions and 0.05 to 2 microns (µm) in thickness. Conventionally, aluminium flakes are manufactured by milling granular or spherical aluminium particles in a solvent. Suitable solvents are, for example, methoxy propanol, white spirit, a high aromatic solvent, or a mixture of solvents.

Normally also a lubricant is added to the aluminium particles before or during milling. The lubricant can, for example, be a fatty acid containing aliphatic and aromatic hydrocarbons. The product obtained normally is a paste. The paste normally comprises lubricant coated aluminium flakes and solvent.

The choice of milling lubricants leads to the production of either leafing type or non-leafing type aluminium flakes. For example, stearic acid may be used to obtain leafing aluminium flakes and oleic acid may be used to obtain non-leafing flakes. Leafing flakes tend to become arranged in a generally flat orientation when present in a coating composition; they may form a layer where the overlapping flakes are orientated parallel to the surface of the coating. In a coating composition according to the present invention, preferably leafing flakes are present.

In one embodiment, the average particle size of the aluminium flakes used is between 10 and 30 microns, as analysed according to ISO 1247. In that case the average particle size preferably is between 10 and 25 microns.

The alkyl orthosilicate, or condensation product thereof, that may be present in the coating composition can for instance comprise alkyl groups with one to eight carbon atoms. If an alkyl orthosilicate is used, optionally a condensation product of an alkyl orthosilicate is used.

In one embodiment, a hydrolysed ethyl orthosilicate is present in the coating composition. The condensation product is a mixture that may comprise monomeric and various oligomeric and cyclic condensates of ethyl orthosilicate. The condensation product preferably contains an amount of silicon of 35-50 percent by weight, more preferably 40-45 percent by weight; in other words, the condensation product preferably contains 35-50, more preferably 40-45, percent by weight SiO₂, calculated on the total weight of the condensation product. If a hydrolysed ethyl orthosilicate is used, preferably a condensation product of tetraethyl orthosilicate is used.

A coating composition according to the present invention preferably comprises 10 to 50 wt.%, more preferably 10 to 40 wt.%, even more preferably 20 to 40 wt.%, and most preferably 15 to 30 wt.% polysiloxane or a mixture of polysiloxanes, calculated on the total weight of the uncured coating composition. The alkyl titanate or mixture of alkyl titanates can for example be present in an amount of 0.5 to 5 wt.%, e.g., 1 to 2 wt.%, calculated on the total weight of the uncured coating composition. The talc and/or mica can for instance be present in an amount of 5 to 35 wt.%, e.g., 15 to 25 wt.%, calculated on the total weight of the uncured coating composition. The aluminium flakes can for instance be present in an amount of 3 to 23 wt.%, e.g., 10 to 17 wt.%, calculated on the total weight of the uncured coating composition. If one or more pastes comprising (coated) aluminium flakes and 30 to 40 wt.% solvent are used to prepare the coating composition, about 5 to 35 wt.% paste can for example be used, e.g., 15 to 25 wt.%, calculated on the total weight of the uncured coating composition. The coating composition may comprise one or more alkyl orthosilicates and/or one or more condensation products of alkyl orthosilicates. Optional ranges for the amount of alkyl orthosilicate(s) and/or hydrolysed alkyl orthosilicate(s) are: 0 to 20 wt.%, 0 to 10 wt.%, 5 to 20 wt%, and 5 to 10 wt.%, calculated on the total weight of the uncured coating composition.

In one embodiment, the coating composition of the present invention comprises:
- one or more branched polysiloxanes having the formula: 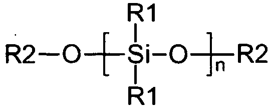 wherein each R1 is independently selected from the group of alkyl, aryl, alkoxy groups having up to eight carbon atoms, and OSi(OR3)₃ groups, wherein each R3 independently has the same meaning as R1, each R2 is selected from the group of hydrogen and alkyl and aryl groups having up to eight carbon atoms, and wherein n is selected such that the number average molecular weight Mn of the polysiloxane is in the range of from 200 to 6,000, preferably 500 - 4,000, said polysiloxane comprising methyl and phenyl groups,
- one or more alkyl titanates,
- talc and/or mica,
- leafing aluminium flakes, and
- optionally one or more hydrolysed ethyl orthosilicates.

These components can for example be present in the amounts listed above.

The coating compositions of the invention may contain one or more further ingredients. They may contain, for example, one or more further fillers and/or pigments. The composition may comprise, for example, wollastonite, carbon black, micaceous iron oxide, a thixotrope, a solvent.

Typically, a coating composition according to the invention does not comprise any organic material besides the alkyl groups on the titanate(s) and the R1, R2, and R3 groups on the polysiloxane. It does not need to comprise an organic adduct or an organic resin. Nevertheless, the composition may comprise up to 5 wt% of an organic adduct or an organic resin, or more if so desired.

The coating compositions of the invention generally cure at ambient temperatures, for example temperatures in the range from 5 to 30 or even 40 °C and thus are suitable for application to large structures where heat curing is impractical. The coating compositions of the invention alternatively can be cured at elevated temperatures, for example temperatures up to 100 or 150 °C or even 200 °C.

One advantage of the coating composition is that it is suitable for in-situ application to steel substrates operating at temperatures up to 150 °C.

The coating composition can be applied by conventional application methods such as airless spray, air spray, brush, and roller.

The coating compositions of the invention in general can be used as finish coatings and/or primer coatings. They can be applied to all kinds of substrates, and are very suitable for application to metal substrates, especially steel substrates. The coating compositions can be applied directly to prepared steel as a primer/finish, i.e. they can be used as the only type of protective coating on a substrate. It is also possible to apply the compositions over a primer, for example a zinc comprising primer. The coating compositions of the present invention can be applied as a single layer or as multiple coats. They can also be overcoated with other high temperature coatings.

The coating compositions according to the invention can be used as maintenance and repair coatings on less than perfect surfaces such as aged blasted steel or "ginger" (steel which has been blasted and has started to rust in small spots), power tool-prepared weathered steel, hydroblasted steel, and aged coatings.

The coating compositions can additionally be used as a sealer on top of a coated substrate. For example, if a substrate is coated with another type of corrosion protection coating, such as a thermal spray aluminium coating, it can be overcoated with a coating composition according to the present invention. In that case the coating of the present invention may act as a sealer coat. It can form an additional barrier against an aggressive atmosphere.

The components of a coating composition according to the present invention can for example be packed as a so-called two-pack composition. In that case, one pack may for example comprise the polysiloxane, while the other pack comprises the titanate.

## Claims

1. A heat and crack resistant anticorrosive coating composition capable of continuous and cyclic temperature operation, which composition comprises:
• a linear or branched polysiloxane having the formula: 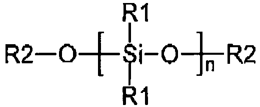 wherein each R1 is independently selected from the group of alkyl, aryl, alkoxy groups having up to eight carbon atoms, and OSi(OR3)₃ groups, wherein each R3 independently has the same meaning as R1; each R2 is selected from the group of hydrogen and alkyl and aryl groups having up to eight carbon atoms; and wherein n is selected such that the number average molecular weight Mn of the polysiloxane is in the range of from 200 to 6,000,
• one or more alkyl titanates,
• talc and/or mica,
• aluminium flakes, and
• optionally an alkyl orthosilicate or a condensation product thereof.

2. The coating composition according to claim 1 wherein
• the one or more branched polysiloxanes comprise methyl and phenyl groups,
• the aluminium flakes are leafing aluminium flakes, and
• the alkyl orthosilicate is a hydrolysed ethyl orthosilicates.

3. The coating composition according to claim 1 or claim 2, wherein said polysiloxane has number average molecular weight (Mn) in the range of 500-4,000.

4. The coating composition according to claim 1 or claim 2, comprising from 5 to 35 wt.%, of said talc and/or mica, calculated on the total weight of the uncured coating composition.

5. The coating composition according to claim 1 or claim 2 comprising further fillers and/or pigments.

6. A substrate coated with a coating composition according to claim 1 or 2.

7. The substrate according to claim 6 **characterized in that** the substrate is selected from carbon steel, stainless steel, and metal coated steel.

8. The substrate according to claim 7 wherein the metal coated steel comprises steel coated with thermally sprayed aluminium or zinc.

## Patentansprüche

1. Hitze- und rissbeständige Antikorrosionsschutzbeschichtungs-Zusammensetzung, die zu einem kontinuierlichen und zyklischen Temperaturbetrieb fähig ist, wobei die Zusammensetzung Folgendes umfasst:
• ein lineares oder verzweigtes Polysiloxan mit der Formel 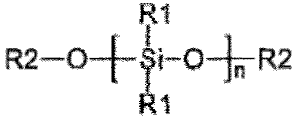 wobei jedes R1 unabhängig ausgewählt ist aus der Gruppe von Alkyl-, Aryl-, Alkoxygruppen mit bis zu acht Kohlenstoffatomen, und OSi(OR3)₃-Gruppen, wobei jedes R3 unabhängig die gleiche Bedeutung wie R1 hat; jedes R2 aus der Gruppe von Wasserstoff und Alkyl- und Arylgruppen mit bis zu acht Kohlenstoffatomen ausgewählt ist, und wobei n so gewählt ist, dass der Zahlenmittelwert des Molekulargewichts Mn des Polysiloxans in dem Bereich von 200 bis 6.000 liegt
• eines oder mehrere Alkyltitanate
• Talk und/oder Glimmer,
• Aluminiumflocken und
• wahlweise ein Alkylorthosilikat oder ein Kondensationsprodukt davon.

2. Beschichtungszusammensetzung nach Anspruch 1, wobei
• das eine oder die mehreren verzweigten Polysiloxane Methyl- und Phenylgruppen umfassen,
• die Aluminiumflocken aufschwimmende Aluminiumflocken sind und
• das Alkylorthosilikat ein hydrolysiertes Ethylorthosilikat ist.

3. Beschichtungszusammensetzung nach Anspruch 1 oder 2, wobei das Polysiloxan einen Zahlenmittelwert des Molkekulargewichts (Mn) in dem Bereich von 500 - 4.000 hat.

4. Beschichtungszusammensetzung nach Anspruch 1 oder 2, umfassend von 5 bis 35 Gew.% des Talks und/oder des Glimmers, berechnet auf das Gesamtgewicht der unausgehärteten Beschichtungszusammensetzung.

5. Beschichtungszusammensetzung nach Anspruch 1 oder 2, umfassend weitere Füllstoffe und/oder Pigmente.

6. Substrat, beschichtet mit einer Beschichtungszusammensetzung nach Anspruch 1 oder 2.

7. Substrat nach Anspruch 6, **dadurch gekennzeichnet, dass** das Substrat aus Kohlenstoffstahl, rostfreiem Stahl und metallbeschichtetem Stahl ausgewählt ist.

8. Substrat nach Anspruch 7, wobei der metallbeschichtete Stahl einen mit thermisch aufgespritztem Aluminium oder Zink beschichteten Stahl umfasst.

## Revendications

1. Une composition de revêtement anticorrosion résistante à la chaleur et à la fissuration capable de fonctionnement en continu et à des températures cycliques, laquelle composition comprenant :
• un polysiloxane linéaire ou ramifié de formule : 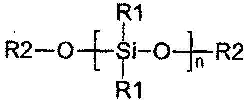 où chaque R1 est indépendamment sélectionné des groupes alkyle, aryle, alcoxy ayant jusqu'à huit atomes de carbone, et des groupes OSi(OR3)₃, où chaque R3 indépendamment a la même signification que R1, chaque R2 est sélectionné du groupe hydrogène et des groupes alkyle et aryle ayant jusqu'à huit atomes de carbone, et où n est sélectionné de façon à ce que la masse moléculaire moyenne en nombre Mn du polysiloxane soit dans la marge de 200 à environ 6,000,
• un ou plusieurs titanates d'alkyle,
• du talc et/ou du mica,
• des flocons d'aluminium, et
• facultativement un orthosilicate d'alkyle ou son produit de condensation.

2. La composition de revêtement conformément à la revendication 1 où
• l'un ou les plusieurs polysiloxanes ramifiés comprennent des groupes méthyle et phényle,
• les flocons d'aluminium sont des flocons d'aluminium pelliculants, et
• l'orthosilicate d'alkyle est un orthosilicate d'éthyle hydrolysé.

3. La composition de revêtement conformément à la revendication 1 ou 2 où ledit polysiloxane a une masse moléculaire moyenne en nombre (Mn) dans la marge de 500 - 4,000.

4. La composition de revêtement conformément à la revendication 1 ou 2 comprenant de 5 à 35% en poids du talc et/out du mica, calculé sur la base du poids total de la composition de revêtement non durcie.

5. La composition de revêtement conformément à la revendication 1 ou 2 comprenant des charges et/ou des pigments additionels.

6. Un substrat revêtu avec une composition de revêtement conformément à la revendication 1 ou 2.

7. Le substrat conformément à la revendication 6 **caractérisé par le fait que** le substrat est sélectionné parmi l'acier au carbone, l'acier inoxydable et l'acier revêtu de métal.

8. Le substrat conformément à la revendication 7 où l'acier revêtu de métal comprends l'acier revêtu d'aluminium ou de zinc atomisé thermiquement.
